# EUROPEAN PATENT SPECIFICATION

(11) **EP 2 778 768 B1**
(45) Date of publication and mention of the grant of the patent: **08.11.2017**
(21) Application number: 13158644.8
(22) Date of filing: 11.03.2013
(51) Int. Cl.: G02C 9/00

(54) **Eyeglass frame**
Brillenrahmen
Monture de lunettes

(43) Date of publication of application: 17.09.2014
(73) Proprietor: Four Nines Co., Ltd., Tokyo 157-0066 (JP)
(72) Inventor: Iimura, Yuichi, Tokyo 157-0066 (JP)
(74) Representative: Pfenning, Meinig & Partner mbB

(56) References cited:
- EP-A1- 2 302 440
- WO-A2-03/040809
- CN-U- 201 965 352
- DE-U1- 9 413 073
- FR-A1- 2 544 087
- FR-A1- 2 643 728
- GB-A- 2 485 174
- US-A1- 2002 057 415

## Description

The present invention relates to an eyeglass frame to hold eyeglass lenses, more specifically, to an eyeglass frame in that, even if temples are opened widely, deformation or braking of the eyeglass lenses is not generated.

Generally, an eyeglass frame includes a front frame to hold right and left eyeglass lenses and temples each being connected to each of opposite ends of the front frame through a hinge. As such a front frame, there are a full rim type (type for holding each lens by a rim extending throughout the entirety of the lens) and a rimless type called a half rim type or two points (type for holding a part of each lens by a rim and for holding the other part of the lens by a screw, wire or string).

When a user uses usually the eyeglass frame, the temples are in a most opened statue (maximum open state or position) relative to the front frame. On the other hand, when a user buys an eyeglass frame, an open degree of the hinge connecting the front frame and each of the temples, or a bending degree of the temples is adjusted such that the temples do not impart a large force to a head of the user, and the temples are fitted to the head.

However, when the user mounts the eyeglasses on the head, or removes them from the head, the user tends to open unconsciously the temples and more widely than the maximum open state. Therefore, if the eyeglass frame is used throughout a long period, the temples result in outwardly bent state and gradually are not fitted to the head, and hence it is difficult to use the eyeglasses. In addition, a large force is sometime added to the front frame due to an excessive opening of the temples. Consequently, the breaking of the front frame, and further the breaking of the eyeglass lenses are generated.

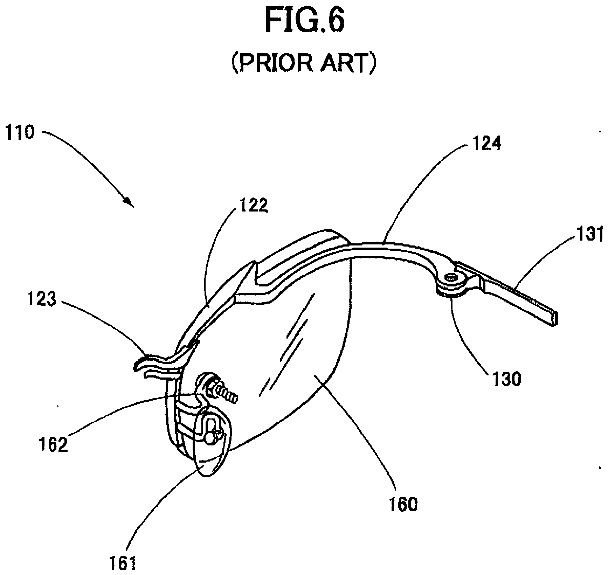

As shown in FIG.6, there is disclosed a conventional eyeglass frame 110 in which, even if temples are opened widely, a force is not imparted to a front frame or eyeglass lenses (for reference, see JP2008-76743A). The eyeglass frame 110 has a generally L-character like shape and includes a pair of right and left lens stays 122 each holding an inner side portion of an eyeglass lens 160, a bridge 123 connecting the pair of lens stays 122, a connection arm 124 connected to each of the lens stays 122, and a temple 131 connected to each of the connection arms 124 through a hinge 130 to be rotatable inwardly and outwardly, Meanwhile, lens stoppers 162 to hold the eyeglass lenses 160 are provided on the lens stays 122.

Here, each of the eyeglass lenses 160 is attached to each of the lens stays 122 at one point. Therefore, even if the temples 131 are opened widely, a force is not almost imparted to the eyeglass lenses 160. In addition, because the temples 131 and the connection arms 124 have elasticity, even if the temples are opened widely repeat, the opening operation or movement can be absorbed by the elasticity of the temples 131 and the connection arms 124, and has no effect on the lenses 160. Meanwhile, reference number 161 shows a nose pad attached to each of the lens stays 122.

However, the structure of the conventional eyeglass frame cannot be applied to a full rim-type front frame made of a resin, because a design and a structure of eyeglasses are limited. Accordingly, it is desired that, even if a wide opening of the temples is repeated, a function having no effect on eyeglass lenses can be applied widely to eyeglasses having other design or structure. Documents FR 2643728 A1 and GB 2485174 A disclose eyeglass frames that do not solve the problem. Another eyeglass frame known from the prior art is shown in document CN 201965352 U.

An object of the present invention is to provide an eyeglass frame which has a function in which even if temples are opened widely, a force is almost not imparted to a front frame or eyeglass lenses, and is capable of having a new design and applying to any type of eyeglasses.

According to the invention, this objective is achieved by an eyeglass frame as defined in claim 1. An eyeglass frame according to the present invention includes, in particular, an outer frame, an inner frame disposed at an inner side of the outer frame and attached to the outer frame, temples each attached to the outer frame to be rotatable between an inwardly folded position and an outwardly opened position, relative to the outer frame. Right and left eyeglass lenses are attached to the inner frame. The outer frame includes right and left opening portions disposed to correspond to the right and left eyeglass lenses attached to the inner frame.

FIG.1 is a schematic plan view of an eyeglass frame according to one embodiment of the present invention.
FIG.2 is a schematic side view of the eyeglass frame shown in FIG.1.
FIG.3 is a schematic front view of the eyeglass frame shown in FIG.1.
FIG.4 is a schematic front view of an inner frame of the eyeglass frame shown in FIG.1.
FIG.5 is a schematic front view of the eyeglass frame shown in FTG.1, with the inner frame being separated from an outer frame.
FIG. 6 is a schematic perspective view showing one example of a conventional eyeglass frame.

Preferred embodiments of the present invention will be explained hereinafter in detail with reference to the accompanying drawings.

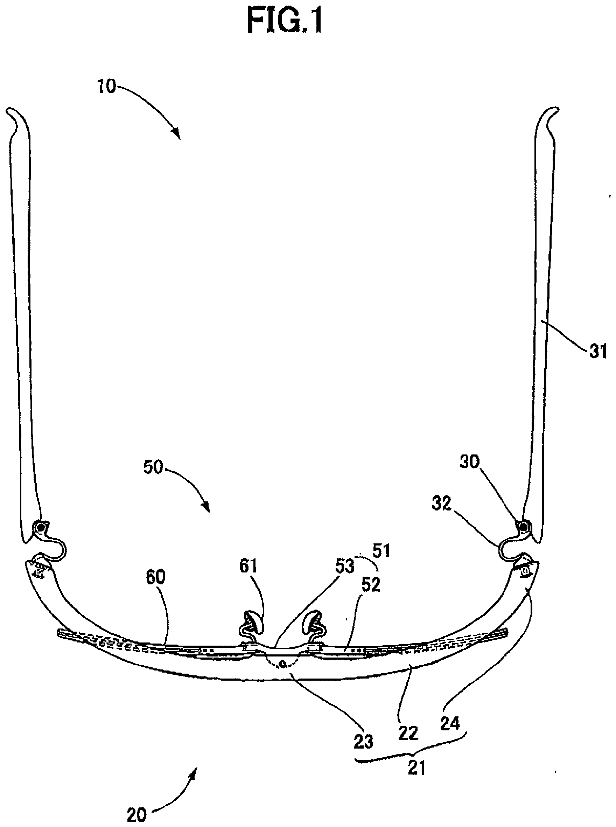

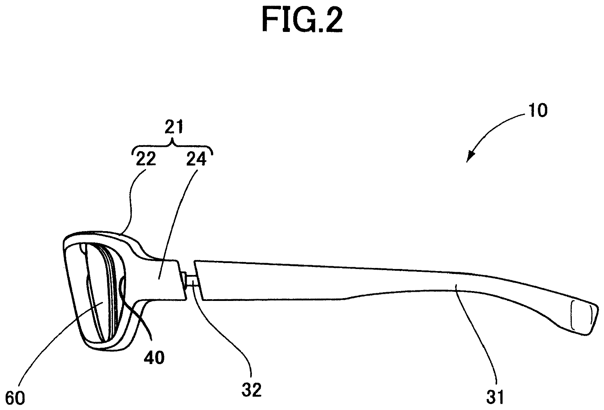

FIGs.1 to 5 illustrate an eyeglass frame 10 according to an embodiment of the present invention. The eyeglass frame 10 includes an outer frame 20, an inner frame 50 disposed at an inner side of the outer frame 20 and attached to the outer frame 20, and temples 31 each being attached to each of opposite ends of the outer frame 20 (see FIG.1).

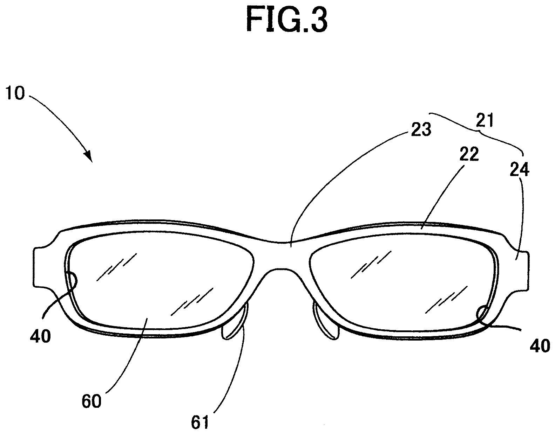

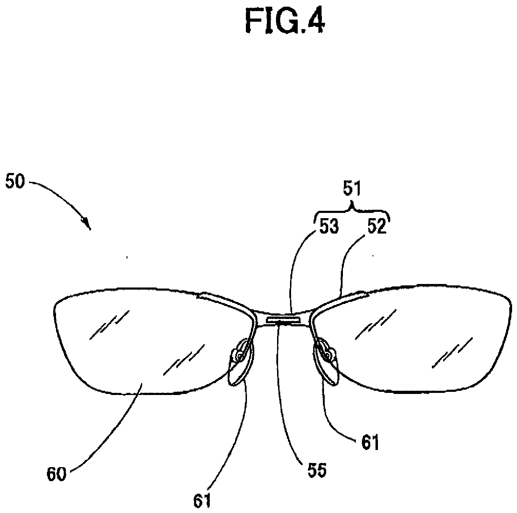

The outer frame 20 includes an outer front frame 21 and connection arms 24 extending backward from opposite ends of the outer frame 20. The inner frame 60 includes an inner front frame 51. Right and left eyeglass lenses 60 are attached to the inner front frame 51 (see FIG.4). The outer front frame 21 includes right and left opening portions 40, 40 provided to face the right and left eyeglass lenses 60 attached to the inner frame 50 (see FIG.3).

The outer front frame 21 includes right and left outer rims 22 and an outer bridge 23 connecting the outer rims 22, as shown in FIG.3. Each of the connection arms 24 extends from the end of each of the right and left outer rims 22. The inner front frame 51 includes right and left inner rims 52 to hold the right and left eyeglass lenses 60, respectively, and an inner bridge 53 connecting the right and left inner rims 52. The right and left opening portions 40, 40 are formed by the right and left outer rims 22, in the illustrated embodiment. In other words, the opening portions 40, 40 are surrounded by the outer rims 22. A shape of the opening portions is formed depending on a shape of the eyeglass lenses 60. Consequently, if the eyeglass frame is used, a user can view an object through the eyeglass lenses 60 of the inner frame 50 and the opening portions 40 of the outer frame 20.

Each of the temples 31 is connected to each of the connection arms 24 of the outer frame 20 through, for example, a hinge 30 to be rotated inward and outward. Thereby, the pair of temples 31 is capable of opening outward and of folding inward relative to the outer frame 20.

The outer front frame 21 is made of, for example, a resin. The temples 31 are made of, for example, a resin, but may be made of a metal. In the illustrated embodiment, the outer front frame 21 is formed by a full rim type, but may be formed by a half rim type.

The hinges 30 mount rotatably the temples 31 on the outer front frame 21 and are configured to limit a rotating range of the temples 31 to a maximum open state. In other words, in a use state of the eyeglass frame 10, the hinges 30 are configured to limit the temples 31 not to rotate exceeding the maximum open state. In a state where the eyeglass frame is not used, the hinges 30 are configured to be capable of folding inward the temples 31 to contain them in a case (not shown).

In the foregoing embodiment, the temples 31 are connected to the outer frame 20 through the hinges 30, but may be connected to the outer frame 20 through elastic parts 32 disposed adjacent to the hinges 30 in addition to the hinges 30, as a modified example. Here, each of the elastic parts 32 can be provided on a part of the connection arm 24, a part of each of the temples 31, or a part of the hinge 30. In the illustrated embodiment, each of the elastic parts 32 has a generally U-character like shape and is connected at one end thereof to the connection arm 24 and at the other end thereof to the temple 31 through the hinge 30. Meanwhile, each of the elastic parts 32 is not limited to the U-chazacter like shape, but may be formed in an S-character like shape. Each of the elastic parts 32 has an appropriate elasticity such that an impact force generated by opening and closing operation of the temple 31 is not transmitted to the outer front frame 21, even if each of the temples 31 is hasty opened or folded (closed).

Each of the elastic parts 32 is preferably deformable resiliently at an angle equal to 10 degrees or more. Thereby, when a user mounts the eyeglass frame 10 on a head or removes it from the head, it is possible to open further the temples 31 exceeding the maximum open state by about 10 degrees or more at one side. Consequently, it is possible to prevent the eyeglass lenses 60 from being broken.

As shown in FIG.4, the inner front frame 51 of the inner frame 50 is made, for example, of a metal. In this embodiment, the inner front frame 51 is formed by a half rim type, but may be formed in a full rim type. Here, the full rim type is a type in which a rim extends throughout the entirety of each eyeglass lens to hold the lens, and the half rim type is a type in which a half rim holds a part of the eyeglass lens and a nylon string or the like holds the other part of the eyeglass lens.

The inner rims 52 of the inner front frame 51 as illustrated is formed to be shorter than a normal half rim type and is composed of only a portion close to a user's nose. That is to say, a length of each of the inner rims 52 is substantially 1/4 of an outer circumference of the eyeglass lens 60. The inner front frame 51 formed in this way is easy to manufacture and is, in particular effective if the eyeglass lenses 60 have a large curvature, because a portion adjusting a shape between the inner front frame 51 and each of the eyeglass lenses 60 is small.

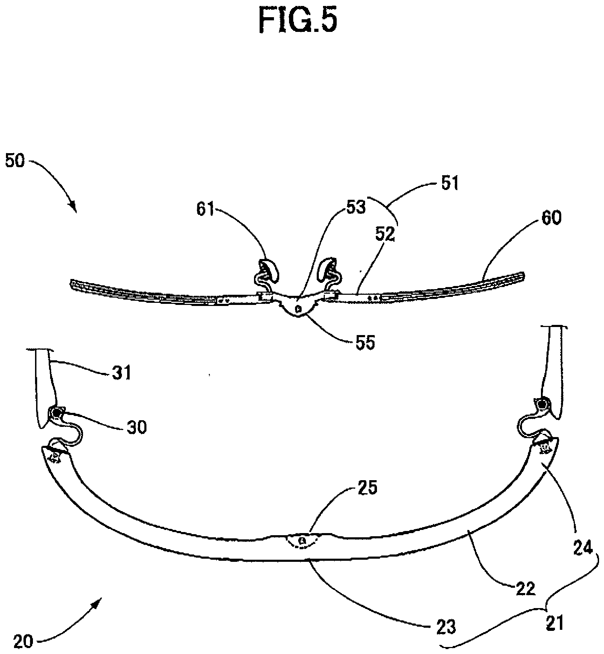

FIG.5 illustrates a state where the inner frame 50 is separated from the outer frame 20, and FIG.1 illustrates a state where the inner frame 50 is connected to the outer frame 20 by a fixing mechanism. The fixing mechanism includes a concave portion 25 provided in an inner side surface or back surface (surface facing a front surface of the inner frame 50) of the outer bridge 23 of the outer frame 20 and a convex surface provided on an outer side surface or front surface (surface facing a back surface of the outer frame 20) of the inner bridge 53 of the inner frame 50 and inserted in the concave portion 25. A screw-inserting hole 41 is provided in an upper surface of the outer frame 20, and a threaded hole 42 is provided in the inner frame 50 to correspond to the screw-inserting hole 41. The inner frame 50 and the outer frame 20 are fixed by inserting the convex portion 55 in the concave portion 25, inserting a screw 43 in the screw-inserting hole 41, and threading the screw 43 into the threaded hole 42. As other fixing methods, the convex portion 55 and the concave portion 25 are fixed by inserting the convex portion 55 in the concave portion 25, after applying a suitable adhesive about the convex portion 55 before inserting the convex portion 55 in the concave portion 25, or inserting the convex portion 55 in the concave portion 25 after filling previously the concave portion 25 with a suitable adhesive. As mentioned above, in case of fixing by the screw 43, it is possible to simplify the exchange of the eyeglass lenses 60 because the inner frame 50 is removed from the outer frame 20 by removing the screw 43. In addition, it is possible to exchange an inner frame of other design.

The eyeglass frame 10 in this embodiment has a structure in which the outer bridge 23 of the outer frame 20 and the inner bridge 53 of the inner frame 50 are connected. The temples 31 are connected to outer frame 20 and the eyeglass lenses 60 are attached to the inner frame 50. Therefore, even if the temples are opened widely, a force generated by the temples is not transmitted to the outer frame 20 and the inner frame 50. In addition, the provision of the elastic part 32 disposed adjacent to each hinge 30 makes it possible to reduce further an influence on the eyeglass lenses.

In addition, the outer front frame 21 can be formed in the full rim type, or the half rim type, the inner front frame 51 also can be formed in the full rim type, or the half rim type. The temples 31 can be made of a resin or metal. Consequently, a design having wide variation can be provided.

Meanwhile, in the eyeglass frame 10, an example in which the nose pads 61 are attached to the inner front frame 51 is shown. However, the nose pads may be attached to the outer front frame 21. In each of the elastic parts 32, a portion thereof adjacent to the connection arm has the U-character like shape, but a portion thereof adjacent to the temple may be formed in a U-character like shape, or a part of the connection arm 24, or a part of the temple 31 can be formed in a U-character like shape.

With the foregoing structure, it is possible to provide an eyeglass frame which has a function in which even if temples are opened widely, a force generated thereby is almost not imparted to a front frame or eyeglass lenses, and is capable of having a new design and applying to any type of eyeglasses.

Although the preferred embodiments of the present invention have been described, it should be understood that the present invention is not limited to these embodiments, various modifications and changes can be made to the embodiments by those skilled in the art as long as such modifications and changes are within the scope of the present invention as defined by the Claims.

## Claims

1. An eyeglass frame (10), comprising:
an outer frame (20);
an inner frame (50) disposed at an inner side of the outer frame (20) and attached to the outer frame (20);
temples (31) each being attached to the outer frame (20) to be rotatable between an inwardly folded position and an outwardly opened position, relative to the outer frame (20); and
right and left eyeglass lenses (60) being attached to the inner frame (50),
wherein the outer frame (20) includes right and left opening portions (40) disposed to correspond to the right and left eyeglass lenses (60) attached to the inner frame (50),
wherein the outer frame (20) includes an outer front frame (21) having right and left outer rims (22) provided to surround the right and left opening portions (40), an outer bridge (23) connecting the outer rims (22), and a connection arm (24) extending from an end of each of the right and left outer rims (22) and connected to each of the temples (31),
wherein the inner frame (50) includes an inner front frame (51) which has right and left inner rims (52) to hold the right and left eyeglass lenses (60), respectively and an inner bridge (53) connecting the right and left inner rims (52) and which is attached to outer front frame (21),
wherein the inner front frame (51) is attached to the outer front frame (21) by a fixing mechanism so that the right and left eyeglass lenses (60) are connected to the outer frame (20), no further lenses being connected to the outer frame (20),
and wherein the fixing mechanism is exclusively connecting the outer bridge (23) of the outer frame (20) and the inner bridge (53) of the inner frame (50), this fixing mechanism being the only connection between the eyeglass lenses (60) and the outer frame (20),
**characterized in that**
the fixing mechanism includes a concave portion (25) provided in an inner side surface of the outer bridge (23) of the outer front frame (21), and a convex portion (55) provided on an outer side surface of the inner bridge (53) of the inner front frame (51) and inserted in the concave portion (25),
wherein a screw-inserting hole (41) is provided in an upper surface of the outer frame (20) at a position corresponding to the concave portion (25), and a threaded hole (42) is provided in the inner frame (50) to correspond to the screw-inserting hole (41) at the convex portion (55), a screw being inserted in the screw-inserting hole (41) and being screwed into the threaded hole (42).

2. The eyeglass frame (10) according to claim 1,
wherein the outer front frame (21) is made of a resin.

3. The eyeglass frame (10) according to claim 1,
wherein the inner front frame (51) is made of a metal.

4. The eyeglass frame (10) according to claim 1,
wherein each of the connection arms (24) of the outer front frame (21) is connected to the temple (31) through a hinge (30).

5. The eyeglass frame (10) according to claim 1,
wherein the outer front frame (21) is a full rim type and the inner front frame (51) is a half rim type.

6. The eyeglass frame (10) according to claim 4,
wherein each connection arm (24) and each temple (31) in the outer front frame (21) are connected through an elastic part provided in addition to the hinge (30).

7. The eyeglass frame (10) according to claim 1,
further comprising nose pads (61) provided on the inner front frame (51).

## Patentansprüche

1. Brillenrahmen (10), welcher aufweist:
einen äußeren Rahmen (20);
einen inneren Rahmen (50), der auf einer inneren Seite des äußeren Rahmens (20) angeordnet und an dem äußeren Rahmen (20) befestigt ist;
Bügel (31), die jeweils an dem äußeren Rahmen (20) angebracht sind, um zwischen einer nach innen gefalteten Position und einer nach außen geöffneten Position relativ zu dem äußeren Rahmen (20) geschwenkt zu werden; und
ein rechtes und ein linkes Brillenglas (60), die an dem inneren Rahmen (50) angebracht sind,
wobei der äußere Rahmen (20) einen rechten und einen linken Öffnungsbereich (40) enthält, die so angeordnet sind, dass sie dem rechten und dem linken Brillenglas (60), die an dem inneren Rahmen (50) angebracht sind, entsprechen,
wobei der äußere Rahmen (20) einen äußeren vorderen Rahmen (21) mit einem rechten und einem linken äußeren Rand (22), die vorgesehen sind, den rechten und den linken Öffnungsbereich (40) zu umgeben, einer äußeren Brücke (23), die die äußeren Ränder (22) verbindet, und eine, Verbindungsarm (24), der sich von einem Ende von jedem von dem rechten und dem linken äußeren Rand (22) weg erstreckt und mit jedem der Bügel (31) verbunden ist, enthält,
wobei der innere Rahmen (50) einen inneren vorderen Rahmen (51), der einen rechten und einen linken inneren Rand (52) um das rechte bzw. linke Brillenglas (60) zu halten, und eine innere Brücke (53), die den rechten und den linken inneren Rand (52) verbindet und an dem äußeren vorderen Rahmen (21) angebracht ist, hat, enthält,
wobei der innere vordere Rahmen (51) an dem äußeren vorderen Rahmen (21) durch einen Befestigungsmechanismus so angebracht ist, dass das rechte und das linke Brillenglas (60) mit dem äußeren Rahmen (20) verbunden sind, und keine weiteren Gläser mit dem äußeren Rahmen (20) verbunden sind,
und wobei der Befestigungsmechanismus ausschließlich die äußere Brücke (23) des äußeren Rahmens (20) und die innere Brücke (53) des inneren Rahmens (50) verbindet und dieser Befestigungsmechanismus die einzige Verbindung zwischen den Brillengläsern (60) und dem äußeren Rahmen (20) ist,
**dadurch gekennzeichnet, dass**
der Befestigungsmechanismus einen konkaven Bereich (25), der in einer inneren Seitenfläche der äußeren Brücke (23) des äußeren vorderen Rahmens (21) vorgesehen ist, und einen konvexen Bereich (55), der auf einer äußeren Seitenfläche der inneren Brücke (53) des inneren vorderen Rahmens (51) vorgesehen und in den konkaven Bereich (25) eingesetzt ist, enthält,
wobei ein Schraubenaufnahmeloch (41) in einer oberen Oberfläche des äußeren Rahmens (20) an einer Position entsprechend dem konkaven Bereich (25) vorgesehen ist und ein Gewindeloch (42) in dem inneren Rahmen (50) so vorgesehen ist, dass es dem Schraubenaufnahmeloch (41) in dem konvexen Bereich (55) entspricht, wobei eine Schraube in das Schraubenaufnahmeloch (41) eingesetzt und in das Gewindeloch (42) geschraubt ist.

2. Brillenrahmen (10) nach Anspruch 1,
bei dem der äußere vordere Rahmen (21) aus einem Harz besteht.

3. Brillenrahmen (10) nach Anspruch 1,
bei dem der innere vordere Rahmen (51) aus einem Metall besteht.

4. Brillenrahmen (10) nach Anspruch 1,
bei dem jeder der Verbindungsarme (24) des äußeren vorderen Rahmens (21) durch ein Scharnier (30) mit dem Bügel (31) verbunden ist.

5. Brillenrahmen (10) nach Anspruch 1,
bei dem der äußere vordere Rahmen (21) vom Vollrandtyp ist und der innere vordere Rahmen (51) vom Halbrandtyp ist.

6. Brillenrahmen (10) nach Anspruch 4,
bei dem jeder Verbindungsarm (24) und jeder Bügel (31) in dem äußeren vorderen Rahmen (21) durch ein elastisches Teil verbunden sind, das zusätzlich zu dem Scharnier (30) vorgesehen ist.

7. Brillenrahmen (10) nach Anspruch 1,
weiterhin aufweisend Nasenpads (61), die an dem inneren vorderen Rahmen (51) angeordnet sind.

## Revendications

1. Monture de lunettes (10), comprenant :
une monture externe (20) ;
une monture interne (50) qui est disposée au niveau d'un côté interne de la monture externe (20) et qui est liée à la monture externe (20) ;
des branches (31) dont chacune est liée à la monture externe (20) de manière à pouvoir être tournée entre une position repliée vers l'intérieur et une position ouverte vers l'extérieur, par rapport à la monture externe (20) ; et
des verres de lunettes droit et gauche (60) qui sont liés à la monture interne (50) ; dans laquelle :
la monture externe (20) inclut des parties d'ouverture droite et gauche (40) qui sont disposées de manière à correspondre aux verres de lunettes droit et gauche (60) qui sont liés à la monture interne (50) ; dans laquelle :
la monture externe (20) inclut une monture avant externe (21) qui comporte des bordures externes droite et gauche (22) qui sont prévues de manière à entourer les parties d'ouverture droite et gauche (40), un pont externe (23) qui connecte les bordures externes (22) et un bras de connexion (24) qui s'étend depuis une extrémité de chacune des bordures externes droite et gauche (22) et qui est connecté à chacune des branches (31), dans laquelle :
la monture interne (50) inclut une monture avant interne (51) qui comporte des bordures internes droite et gauche (52) de manière à respectivement maintenir les verres de lunettes droit et gauche (60) et un pont interne (53) qui connecte les bordures internes droite et gauche (52) et qui est lié à la monture avant externe (21) ; et dans laquelle :
la monture avant interne (51) est liée à la monture avant externe (21) au moyen d'un mécanisme de fixation de telle sorte que les verres de lunettes droit et gauche (60) soient connectés à la monture externe (20), aucun autre verre n'étant connecté à la monture externe (20) ; et dans laquelle :
le mécanisme de fixation connecte de manière exclusive le pont externe (23) de la monture externe (20) et le pont interne (53) de la monture interne (50), ce mécanisme de fixation étant la seule connexion entre les verres de lunettes (60) et la monture externe (20),
**caractérisée en ce que** :
le mécanisme de fixation inclut une partie concave (25) qui est prévue dans une surface latérale interne du pont externe (23) de la monture avant externe (21) et une partie convexe (55) qui est prévue sur une surface latérale externe du pont interne (53) de la monture avant interne (51) et qui est insérée dans la partie concave (25), dans laquelle :
un trou d'insertion de vis (41) est ménagé dans une surface supérieure de la monture externe (20) en une position qui correspond à la partie concave (25), et un trou taraudé (42) est ménagé dans la monture interne (50) de manière à ce qu'il corresponde au trou d'insertion de vis (41) au niveau de la partie convexe (55), une vis étant insérée à l'intérieur du trou d'insertion de vis (41) et étant vissée à l'intérieur du trou taraudé (42).

2. Monture de lunettes (10) selon la revendication 1, dans laquelle la monture avant externe (21) est réalisée en une résine.

3. Monture de lunettes (10) selon la revendication 1, dans laquelle la monture avant interne (51) est réalisée en un métal.

4. Monture de lunettes (10) selon la revendication 1, dans laquelle chacun des bras de connexion (24) de la monture avant externe (21) est connecté à la branche (31) par l'intermédiaire d'une charnière (30).

5. Monture de lunettes (10) selon la revendication 1, dans laquelle la monture avant externe (21) est du type pleine bordure et la monture avant interne (51) est du type demi-bordure.

6. Monture de lunettes (10) selon la revendication 4, dans laquelle chaque bras de connexion (24) et chaque branche (31) au niveau de la monture avant externe (21) sont connectés par l'intermédiaire d'une partie en matière plastique qui est prévue en plus de la charnière (30).

7. Monture de lunettes (10) selon la revendication 1, comprenant en outre des patins de nez (61) qui sont prévu(e)s sur la monture avant interne (51).
